Europäisches Patentamt

European Patent Office

Office européen des brevets

(19)

(11) Veröffentlichungsnummer: **0 120 203**

A1

## (12) EUROPÄISCHE PATENTANMELDUNG

(21) Anmeldenummer: 84100656.2

(22) Anmeldetag: 23.01.84

(51) Int. Cl.³: **G 01 N 21/78**
G 01 N 31/22

(30) Priorität: 23.03.83 CH 1579/83

(43) Veröffentlichungstag der Anmeldung:
03.10.84 Patentblatt 84/40

(84) Benannte Vertragsstaaten:
AT BE CH DE FR GB IT LI NL SE

(71) Anmelder: CERBERUS AG
Alte Landstrasse 411
CH-8708 Männedorf(CH)

(72) Erfinder: Forster, Martin, Dr. sc. nat. ETH
Sonnenbergstrasse 16
CH-8645 Jona(CH)

(74) Vertreter: Tiemann, Ulrich, Dr.-Ing.
c/o Cerberus AG Patentabteilung Alte Landstrasse 411
CH-8708 Männedorf(CH)

(54) Vorrichtung zum Nachweis von gasförmigen Verunreinigungen in Luft mittels eines Gassensors.

(57) Der Gassensor 2, der für den Gasnachweis in Luft benutzt wird, enthält als Material 1 ein optisch transparentes Gel aus mindestens einem Metalloxid oder Metalloxidgemisch mit:
- einer Porosität die mindestens 5 Vol.-% beträgt;
- einem Brechungsindex, der zwischen demjenigen von Luft und demjenigen des nichtporösen Metalloxids gleicher chemischer Zusammensetzung liegt;
- einer Korngrösse, die maximal 100% der Wellenlänge des verwendeten Lichtes beträgt, das durch den Gassensors gesendet wird.

Die Ansprechempfindlichkeit des Gassensors auf die zu detektierenden Gase wird durch die günstigste Länge des Gassensors und/oder durch die günstigste Wegstrecke des Lichtstrahls im Material I eingestellt.

Fig.3

EP 0 120 203 A1

Croydon Printing Company Ltd.

0120203

C 247                         83 - 104    22. März 1983
                              CERBERUS AG, 8708 Männedorf

---

Vorrichtung zum Nachweis von gasfömigen Verunreinigungen in
Luft mittels eines Gassensors.

---

Die Erfindung betrifft eine Vorrichtung zum Nachweis von gasförmigen Verunreinigungen in Luft mittels eines Gassensors.

Gassensoren werden seit einiger Zeit für verschiedene Zwecke
wie zum Beispiel Umweltschutz, Garagen-Ueberwachung, Brandschutz und Explosionsschutz verwendet. Hierzu benützt man
billige Sensoren aus Metalloxiden, deren elektrischer Leitwert von der Konzentration der zu detektierenden Gase in der
umgebenden Luft abhängt. Zur Durchführung des Gasnachweises
mit diesen Sensoren muss der Sensor auf eine Temperatur von
ca. 300°C gebracht werden. Wenn auch der bekannte Spurengasnachweis mittels des elektrischen Leitwertes zufriedenstellend arbeitet, hat diese Methode jedoch einige Nachteile,
die im folgenden näher beschrieben werden. Die Leistungsaufnahme für die Aufheizung des Sensors auf seine Betriebstemperatur liegt im Bereich von 400 mW bis 800 mW. Für viele Anwendungen ist diese Leistungsaufnahme nicht zulässig. Hierbei wird an den Spannungsabfall über lange Leitungen in grossflächigen Überwachungssystemen gedacht. Ferner ist die Notstromversorgung für diese ausgedehnten Ueberwachungssysteme
sehr aufwendig. Die Leistungsaufnahme wird wesentlich durch
die Anzahl der zum Sensor führenden Zuleitungen bestimmt.
Die Grösse der Sensoroberfläche ist eine Hauptursache für den Wärmeverlust am Sensor. Ein bekannter Sensor hat vier
Zuleitungen für die Messung seiner elektrischen Leitfähigkeit, sodass an ihm ein ziemlich grosser Wärmeverlust auftritt. Die Rolle der Sensorzuleitung im Wärmehaushalt wird
um so ausgeprägter, je kleiner der Sensorbauteil wird.

Die sensoraktive Substanz muss bekanntlich in einer Form hergestellt werden, die sich für die Messung der elektrischen
Leitfähigkeit gut eignet. Im allgemeinen sind das Filme oder
Schichten, die mit verschiedenen   Methoden auf Substrate
aufgebracht werden, zum Beispiel Sputtern, Aufdampfen, Sprayen, Aufstreichen, usw. Für viele Materialien lässt sich die
Herstellung eines Filmes jedoch nicht leicht  realisieren.
Vor allem dann, wenn zum Beispiel im Herstellungsprozess organische Substanzen, welche sich bei höheren Temperaturen
zersetzen, verwendet werden, und daher mit den erwähnten Methoden nicht in Form homogener Schichten hergestellt werden
können.

Die gasaktiven Schichten des Sensors sind nicht sehr gasselektiv. Um eine gewisse Selektivität zu erreichten, müssen die
Ansprechkurven von verschiedenen Gasaktivschichten ausgewertet werden, um auf diese Weise die Querempfindlichkeiten bei
der Messung des elektrischen Leitwertes des Sensors zu eleminieren. Das bedeutet jedoch, dass mehrere Sensoren aufgeheizt
werden müssen, wobei beträchtliche Heizverluste über die
elektrischen Zuleitungen in Kauf genommen werden müssen.

Häufig werden die Sensoren in explosionsgefährdeten Räumen
eingesetzt. Hohe Heizleistungen sowie elektrische Zuleitungen
sind in diesem Fall besonders ungünstig.

Die Erfindung hat die Aufgabe, die Nachteile der bekannten

3

Gassensoren zu beseitigen und darüber hinaus einen Gassensor mit folgenden Eigenschaften zu konzipieren:

- eine hohe Gasdurchlässigkeit für das zu detektierende Gas und daher ein schnelles Ansprechen des Gassensors;

- eine grosse Oberfläche für hohe Ansprechempfindlichkeit trotz kleiner räumlicher Abmessungen;

- eine optische Transparenz für den Lichtstrahl zum Feststellen der Reaktion des Gassensors auf das zu detektierende Gas.

- optimale Auswahl der Ansprechempfindlichkeit auf die zu detektierenden Gasarten durch Einstellen der günstigsten Länge des Gassensors und/oder der günstigsten Wegstrecke des durch den Gassensor tretenden Lichtstrahls.

Die Aufgabe wird durch die in den Patentansprüchen 1 bis 5 definierten Merkmale der Erfindung gelöst.

Ausführungsbeispiele der Erfindung werden anhand der Zeichnungen näher erläutert. Es zeigen:

Fig. 1 und 2     zwei Materialien des Gassensors,
Fig. 3,4,5,6     verschiedene Ausführungen der Erfindung,
                 bei denen der Lichtstrahl nur einmal
                 durch den Gassensor geführt wird,
Fig. 7,8,9       verschiedene Ausführungen der Erfindung,
                 bei denen der Lichtstrahl mindestens
                 zweimal durch den Gassensor geführt wird,
Fig.10 und 11    ein Ausführungsbeispiel der Erfindung, bei dem der Lichtstrahl über viele,
aber nur kurze Strecken durch das
Material des Gassensors geführt
wird,

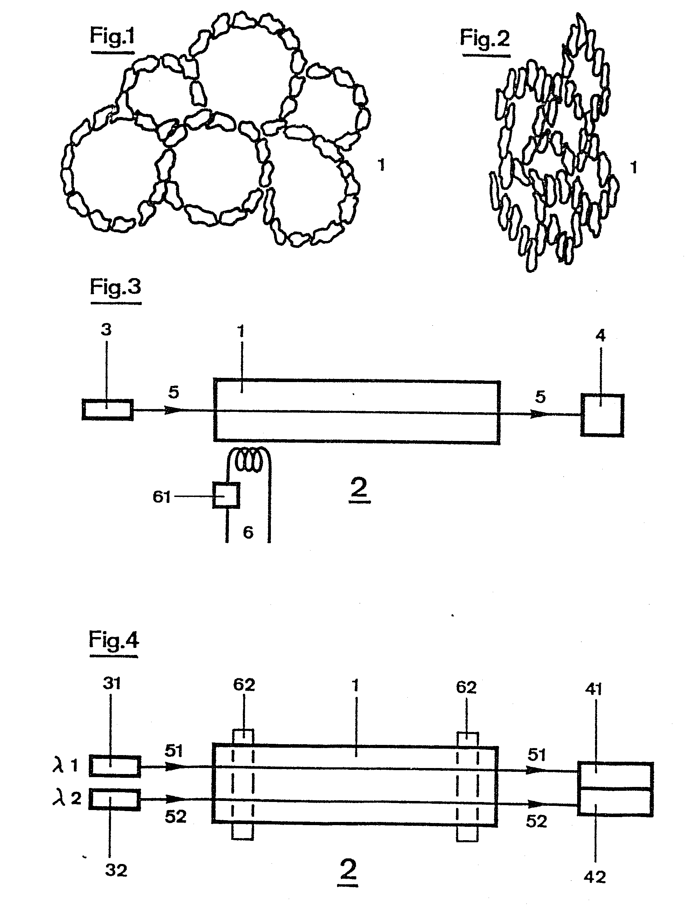

Fig. 4, 10, 12, 13, 14, 15 verschiedene Ausführungsbeispiele
16 der erfindungsgemässen Heizeinrichtung für den Gassensor.

Die Figuren 1 und 2 zeigen zwei Materialien 1 des Gassensors
2, welche die für den Gassensor geforderten Eigenschaften besitzen:

- eine besonders grosse Porosität, die zwischen 5 Vol.-%
  und 99,9 Vol.-% liegt, sodass eine hohe Durchlässigkeit
  für die zu detektierenden Gase gewährleistet ist;

- eine grosse Oberfläche infolge der grossen Anzahl von angelagerten Körnern, wobei die räumlichen Abmessungen des
  Gassensors im Bereich von 0,1 mm bis 100 mm liegen;

- eine Korngrösse, deren Durchmesser d kleiner oder gleich
  der Wellenlänge $\lambda$ des verwendeten Lichtes ist.

- einen Brechungsindex $n_g$, der zwischen demjenigen von Luft
  und demjenigen des nichtporösen Metalloxids gleicher chemischer Zusammensetzung liegt.

Das Material 1, das auch als Gel bezeichnet wird, besteht aus
mindestens einem Metalloxid oder einem Metalloxidgemisch aus
einer oder mehreren der folgenden Gruppen des Periodensystems:
Ib,IIa,IIb,IIIa,IIIb,IVa,IVb,Va,Vb,VIa,VIb,VIIb,VIII einschliesslich den Lanthaniden und Aktiniden. Vorzugsweise handelt es sich um folgende Metalloxide: $SnO_2$,$ZnO$,$TiO_2$,$WO_3$,$Cr_2O_3$,
$Fe_2O_3$ und folgende Metalloxidgemische: $SnO_2+ZnO$, $SnO_2+TiO_2$,
$SnO_2+Al_2O_3$. Die Metalloxide beziehungsweise Metalloxidgemische
können mit Katalysatoren wie zum Beispiel Pt, Pd, Rh, Ir, CuO,
NiO, $Cr_2O_3$, aktiviert werden.

Die Herstellung von Gelen ist allgemein in der DE-OS 1 935 722, US-PS 3 672 833 beschrieben. Allerdings haben diese Gele nicht die für die vorliegende Erfindung geforderten Eigenschaften. Daher wird im folgenden die Herstellung des Materials 1 des erfindungsgemässen Gassensors 2 anhand von zwei bevorzugten Beispielen beschrieben.

16,4 g $SnCl_4 \cdot 5H_2O$ werden in 40 g $H_2O$ gelöst. Diese Lösung wird während mehrerer Tage dialysiert. Nach dieser Zeit wird ein ziemlich hartes Aquagel von $SnO_2 \cdot x \, H_2O$ erhalten.

Zur Herstellung des in Figur 1 gezeigten Aerogels wird das Aquagel während mehrerer Wochen in immer wieder erneuertes Methanol gelegt und so das Wasser gegen Methanol ausgetauscht. Anschliessend wird das Alkogel in Methanol in einem Autoklaven bei überkritischer Temperatur und überkritischem Druck getrocknet. Man erhält so ein transparentes Aerogel mit einer Porosität von ca. 80 Vol.-%, das sich unter Einwirkung von reduzierenden Gasen dunkel färbt und in oxidierender Atmosphäre wieder hell wird.

Zur Herstellung des in Figur 2 gezeigten Xerogels wird das Aquagel während zwei Wochen an der Luft langsam getrocknet und anschliessend bei 300°C für einige Stunden ausgeheizt. Man erhält transparente, gelbliche Stücke von $SnO_2$-Xerogel mit einer Porosität von ca. 40 Vol.-%, die beim Erhitzen auf ca. 300°C in reduzierender Atmosphäre dunkel und in oxidierender Atmosphäre wieder hell werden.

Die Korngrösse der Gele der Figuren 1 und 2 beträgt ungefähr d = 5 nm. Die Porosität liegt bei ca. 40 - 80 Vol.-%. Die Anzahl der angelagerten Körner ist natürlich wesentlich grösser als in den Fig. 1 und 2 dargestellt. Wegen dieser sehr grossen Anzahl der Körner ist eine besonders grosse Oberfläche gewährleistet. Der Vollständigkeit halber wird darauf hingewiesen, dass die Gele der Fig. 1 und 2 sämtliche Forderungen erfüllen, die für den erfindungsgemässen Gassensor aufgestellt worden sind.

Die Fig. 3 zeigt den Gassensor 2, der zwischen einer Lichtquelle 3 und einer Auswerteeinheit 4 angeordnet ist. Die Lichtquelle 3 erzeugt einen Lichtstrahl 5 von einer bestimmten Wellenlänge $\lambda$ , die im Bereich von 0,2 $\mu$m - 50 $\mu$m liegt. Das Material 1, das von einem bestimmten Gas durchdrungen wird, ändert seine optische Transmissions-Eigenschaft. Zum Beispiel kann es eine dunkle Farbe annehmen. Der Lichtstrahl 5 wird hierdurch entsprechend geschwächt. Diese Schwächung wird in der Auswerteeinheit 4 detektiert und über nicht dargestellte elektrische Leitungen einer Anzeigevorrichtung zugeführt , die die Gaskonzentration anzeigt. Der Gassensor kann in beliebiger Form aus den Materialien der Fig. 1 und 2 hergestellt sein. Er kann von länglicher Form mit einem kreisförmigen, elliptischen, quadratischen oder rechteckigen Querschnitt sein. Letzteres ist in der Fig. 3 angedeutet. Der Gassensor 2 kann auch als dünne Scheibe ausgebildet sein. Die Länge des Gassensors 2 hängt davon ab, welche Gasart detektiert werden soll. Durch die Länge des Gassensors kann nämlich seine Empfindlichkeit auf bestimmte Gasarten eingestellt werden. Die Länge des in der Fig. 3 gezeigten Gassensors 2 liegt im Bereich von 0,1 mm bis 100 mm. Die Heizeinrichtung 6 soll zeigen, dass der Gassensor auf eine Betriebstemperatur aufgeheizt werden kann. Die Betriebstemperatur liegt bis max. 450°C. Die verschiedenen Metalloxide bzw. Metalloxidgemische, aus denen der Gassensor 2 hergestellt werden kann, benötigen entweder die Raumtemperatur oder eine eigene erhöhte Betriebstemperatur. Für den letzteren Fall ist die Heizeinrichtung 6 dargestellt. Sie ist in dem Ausführungsbeispiel der Fig. 3 als einfache Widerstandsheizung gezeigt, die von einem Gerät 61 zur Konstanthaltung der Betriebstemperatur gesteuert wird. Die verschiedenen anderen Heizmöglichkeiten werden im Zusammenhang mit den Fig. 4, 10 bis 16 näher diskutiert.

Die Fig. 4 zeigt einen Gassensor 2, der zwischen zwei Lichtquellen 31, 32 und Auswerteeinheiten 41, 42 angeordnet ist. Die Lichtquelle 31 erzeugt eine Wellenlänge $\lambda_1$, die andere Lichtquelle 32 erzeugt die andere Wellenlänge $\lambda_2$. Die Wellenlänge wird danach ausgewählt, welche die grösste Empfindlichkeit für das bzw. die zu detektierenden Gase aufweist. Als Gase können zum Beispiel in Frage kommen: Kohlenmonoxid, Sauerstoff, Wasserstoff, Methan usw. Allgemein gesagt handelt es sich hierbei um oxidierende oder reduzierende Gase. In Abhängigkeit von der Gasart, die in das Material 1 eindringt, ändert sich dessen Transmissions-Eigenschaft spezifisch. Diese spezifische Aenderung wird zur Erhöhung der Empfindlichkeit des Gassensors in der Weise ausgenutzt, dass die für diese Aenderung spezifische Wellenlänge des Lichtstrahls 51 oder 52 ausgewählt und die Länge des Gassensors entsprechend angepasst werden. Wichtig ist, dass die Wegstrecke des Lichtstrahls durch den Gassensor für das zu detektierende Gas optimal ist. Der Gassensor 2 der Fig. 4 enthält an seinen beiden Enden je eine Elektrode. Da das Material 1 des Gassensors eine, wenn auch nur schwache, elektrische Leitfähigkeit besitzt, kann der Gassensor 2 durch Anlegen einer elektrischen Spannung an die beiden Elektroden aufgeheizt werden. Ein nicht gezeigtes Gerät 61 kann wie im Ausführungsbeispiel der Fig. 3 die Temperatur des Gassensors 2 konstant halten. Bei Eindringen der zu detektierenden Gase verändert sich die Transmissionseigenschaft des Materials 1, sodass die Lichtstrahlen 51, 52 der Fig. 4 ihre Intensität ändern. Die Auswerteeinheiten 41, 42 verarbeiten dies und geben auf nicht dargestellten Anzeigeeinrichtungen die Konzentration und den Typ des detektierten Gases an. An den Auswerteeinheiten 41, 42 können auch Alarmeinrichtungen

- 8 -

vorgesehen sein, die bei Ueberschreiten eines bestimmten Konzentrationspegels Alarm geben und Abwehrmassnahmen zur Beseitigung der gefährlichen Gaskonzentration einleiten.

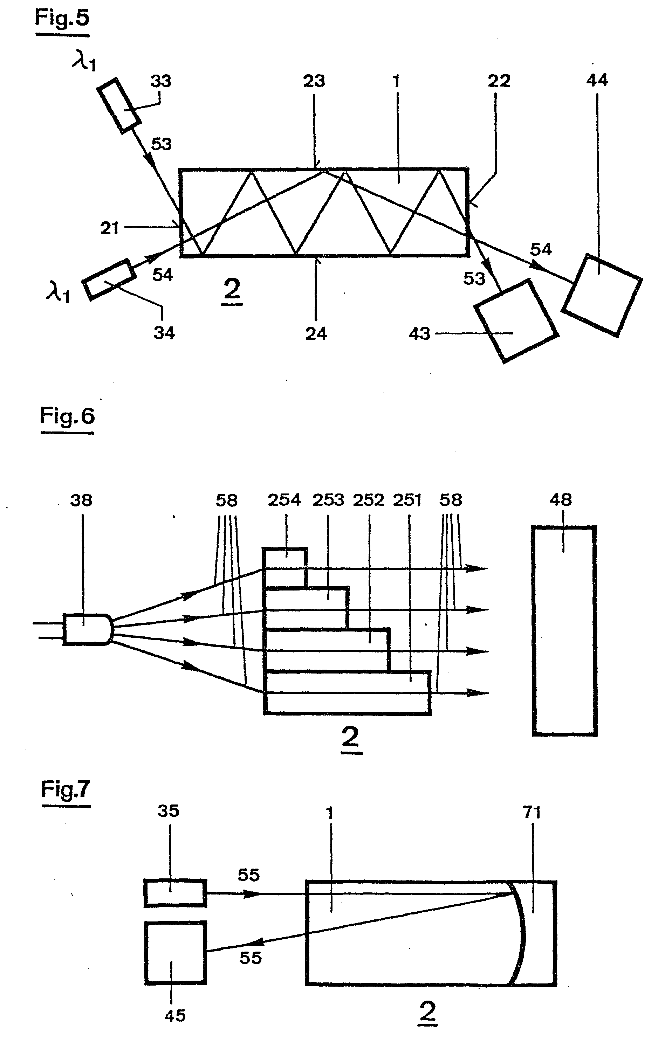

Fig. 5 zeigt einen das Material 1 enthaltenden Gassensor 2, der zwischen den Lichtquellen 33, 34 und den Auswerteanlagen 43, 44 angeordnet ist (Lichteintrittsfläche 21, Lichtaustrittsfläche 22), wobei jedoch zur Erhöhung der Empfindlichkeit des Gassensors auf eine bestimmte Gasart die Wegstrecke des Lichtstrahls 53, 54 durch einmalige oder mehrmalige Totalreflexion verlängert wird. Die beiden Lichtquellen sollen im vorliegenden Ausführungsbeispiel mit der gleichen Wellenlänge $\lambda_1$ arbeiten. Die Auswerteeinheiten 43 und 44 sind so angeordnet, dass sie den Lichtstrahl 53 bzw. 54 der ihnen zugeordneten Lichtquelle empfangen können. Die Totalreflexionen an den Seitenwänden 23 und 24 des Gassensors 2 erfolgen durch entsprechende Einhaltung der Einfallwinkel. An dieser Stelle sei darauf hingewiesen, dass der Brechungsindex $n_g$ des optisch transparenten Materials 1 immer kleiner ist als derjenige des nicht porösen Metalloxids gleicher chemischer Zusammensetzung. Zum Beispiel ist für einen Gassensor 2 aus einem $SnO_2$-Gel mit einer Porosität von ~80 Vol.-% $n_g$ = 1.20 gegenüber $n_g$ = 2.0 für nicht poröses $SnO_2$. Der Gassensor 2 der Fig. 5 kann bei Raumtemperatur betrieben werden, so dass eine Heizungseinrichtung nicht erforderlich ist.

Die Fig. 6 zeigt einen Mehrfach-Gassensor, der aus mehreren Sensorelementen 251, 252, 253, 254 besteht. Jedes dieser Sensorelemente hat eine unterschiedliche Länge und kann aus gleichem Material 1 oder aus unterschiedlichem Material 1 bestehen. Hiermit soll angedeutet werden, dass jedes dieser Sensorelemente auf eine bestimmte Gasart optimal ansprechbar ist. Sämtliche Sensorelemente 251 - 254 werden von einer Lichtquelle 38 beleuchtet. Diese Lichtquelle kann wie angedeutet eine Optik aufweisen, die die Lichtstrahlen 58 so bündelt, dass jedes der Sensorelemente genügend Lichtintensität erhält. Die aus den Sensorelementen austretenden Lichtstrahlen 58 gelangen auf eine Auswerteeinheit 48, die für jeden dieser Lichtstrahlen einen eigenen Empfänger enthält. Die Auswerteeinheit kann also individuell für jede Gasart eine konkrete Aussage machen und Alarm geben bzw. geeignete Abwehrmassnahmen einleiten. Es ist auch daran gedacht worden, dass für jedes der Sensorelemente 251 bis 254 eine eigene Lichtquelle mit einer eigenen Wellenlänge $\lambda$ vorgesehen ist. Hierdurch kann die Empfindlichkeit jedes der Sensorelemente 251 - 254 für die verschiedenen Gasarten noch mehr erhöht werden.

Zusätzlich kann mindestens eines der Sensorelemente 251 - 254 als Referenzsensor ausgebildet sein, indem es aus einem optisch transparenten Gel besteht, das aber sein optisches Absorptionsvermögen nicht ändert unter dem Einfluss von oxidierenden oder reduzierenden Gasen, wie zum Beispiel reines $Al_2O_3$ oder $SiO_2$. Eine Aenderung der Intensität des Lichtes, das diesen Referenzsensor durchquert hat, zeigt eine Aenderung der Strahlungsintensität der Lichtquelle 38 an und/oder eine Verschmutzung des gesamten Sensors 2. Mit dieser Referenzmessung kann deshalb die Genauigkeit der Messung der Gaskonzentration nochmals erhöht werden.

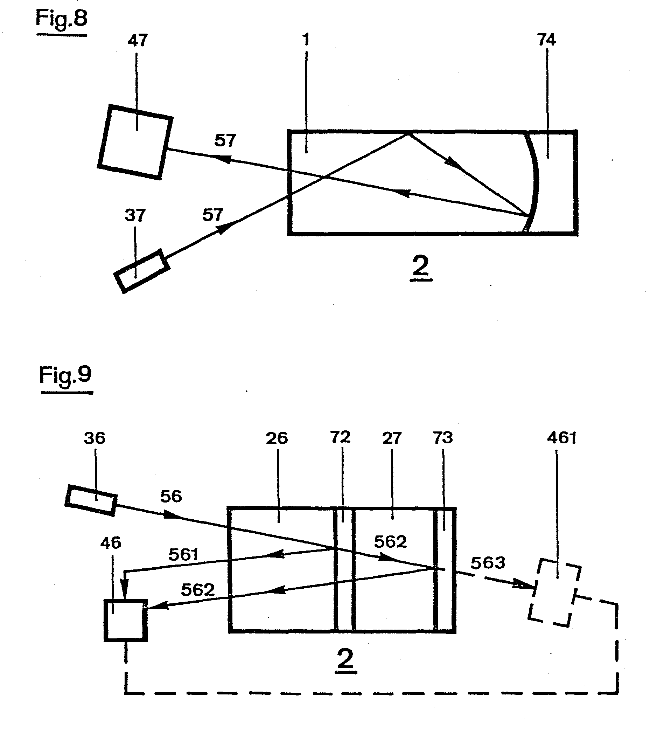

Die Fig. 7 zeigt einen Gassensor 2, auf dessen einen Seite die Lichtquelle 35 und die Auswerteeinheit 45 angeordnet sind und auf dessen anderer Seite ein Spiegel 71 vorgesehen ist. Dieser Spiegel 71 kann ein elliptischer, sphärischer, ebener oder Parabol-Spiegel sein. Wichtig ist, dass die Lichtstrahlen 55 in der gezeichneten Weise geleitet werden. Die Wegstrecke des Lichtstrahles 55 im Material 1 ist bei diesem Ausführungsbeispiel optimal an die zu detektierende Gasart angepasst. Hierdurch wird also die Ansprechempfindlichkeit des Gassensors 2 erhöht.

Die Fig. 8 zeigt ein ähnliches Beispiel, bei dem die Lichtquelle 37 und die Auswerteeinheit 47 auf der gleichen Seite des Gassensors 2 angeordnet sind. Die andere Seite des Gassensors ist mit einem Spiegel 74 versehen, der in gleicher Weise wie der Spiegel 73 der Fig. 7 ausgestattet sein kann. Im Beispiel der Fig. 8 wird der eine Lichtstrahl 57, der von der Lichtquelle 37 kommt, an einer der Seitenwände des Gassensors total reflektiert. Die Fig. 8 soll nur aufzeigen, wie die Wegstrecke des Lichtstrahls innerhalb des Materials 1 des Gassensors 2 in vielfältiger Weise verändert werden kann, so dass die Empfindlichkeit des Gassensors optimal auf die zu detektierende Gasart eingestellt wird.

Die Fig. 9 zeigt den Gassensor 2, der aus zwei Teilen 26 und 27 besteht, welche durch eine halbdurchlässige Spiegelfläche 72 getrennt sind. Die Lichtquelle 36 sendet ihren Strahl 56 in den Referenzteil 26, der an der Spiegelfläche 72 zur Hälfte als Lichtstrahl 561 reflektiert und als Referenzstrahl auf die Auswerteeinheit 46 gegeben wird. Die andere Hälfte des Lichtstrahls 56 wird als Messstrahl 562 durch den Messteil 27 des Gassensors geleitet und an der Spiegelfläche 73 reflektiert. Dieser reflektierte Messstrahl gelangt auf den Messeingang der Auswerteeinheit 46.

Es sei noch darauf hingewiesen, dass der Referenzteil 26 aus einem Gel besteht, das seine optischen Eigenschaften nicht verändert unter der Einwirkung von oxidierenden oder reduzierenden Gasen (z.B. $Al_2O_3$ oder $SiO_2$), wohingegen der Messteil 27 aus einem Gel besteht, dessen Absorptions- und/ oder Reflektionsspektrum schon bei Anwesenheit von kleinen Konzentrationen an oxidierenden oder reduzierenden Gasen sich stark verändert, so dass dieser gasaktive Teil die Intensität des Messlichtstrahles 562 schon bei kleinen Gaskonzentrationen stark verändert. Das Gel des Messteils enthält vorzugsweise $SnO_2$ und kann mit Katalysatoren angereichert sein, wie z.B. Pt, Pd, Rh, Ir, CuO, NiO.

Wenn nun die Spiegelfläche 73 entfernt wird, so gelangt der Messstrahl 563, der gestrichelt dargestellt ist, auf einen gestrichtelt gezeichneten Empfänger 461, der die entsprechenden elektrischen Signale auf den Messeingang der Auswerteeinheit 46 gibt. Diese Möglichkeit wird nur dann angewandt, wenn spezielle Gründe beim Einbau des Gassensors dies verlangen.

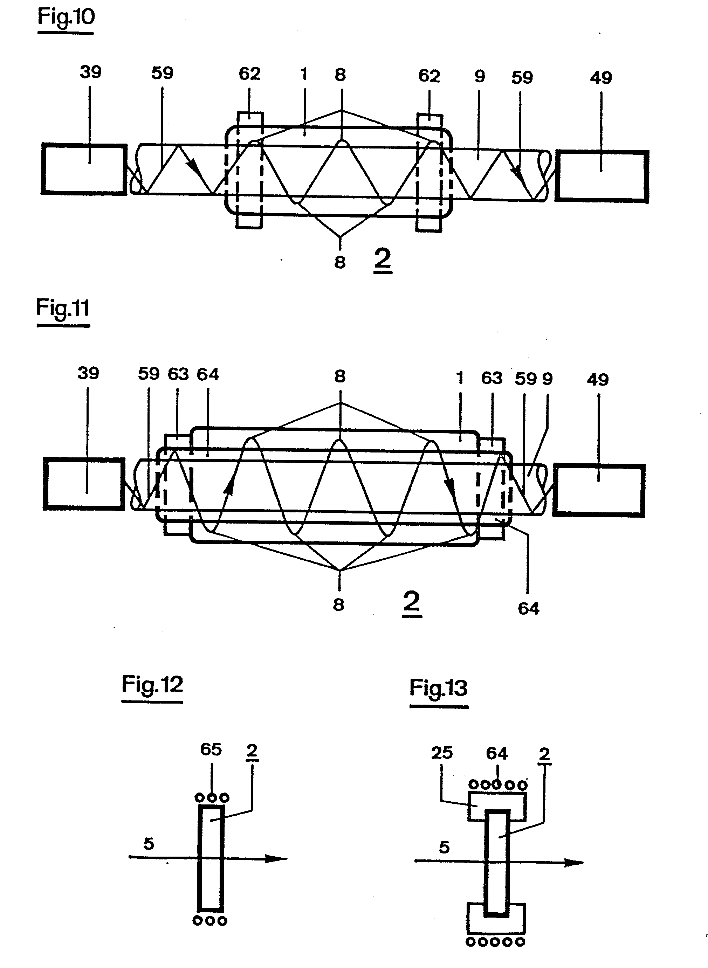

Die Fig. 10 zeigt einen Gassensor 2, der einen Lichtleiter 9 enthält, der rundherum vom Material 1 umgeben ist. Auf der linken Seite des Lichtleiters ist eine Lichtquelle 39 vorgesehen, deren Lichtstrahl 59 durch den Lichtleiter transportiert wird. Da der Brechungsindex $n_1$ des Materials 1 kleiner ist als derjenige $n_2$ des Lichtleiters 9, erfolgt an der Grenzschicht zwischen dem Lichtleiter 9 und dem Material 1 eine Totalreflexion, bei der der Lichtstrahl ungefähr um das Mass seiner Wellenlänge in das Material 1 eindringt, dort umbiegt und in den Lichtleiter zurückkehrt. Wenn diese sogenannten Reflexionsstellen 8 in genügender Anzahl vorgesehen sind, so erfolgt auch eine Beeinflussung der Intensität des Lichtstrahls 59 durch die Einwirkung eines Gases im Material 1. Auf der rechten Seite des Lichtleiters 9 ist eine Auswerteeinheit 49 vorgesehen, die in bekannter Weise diese Intensitätsänderung des Lichtstrahls 59 verarbeitet und weiterleitet. Der Vollständigkeit halber sind zwei Elektroden 62 am Material 1 befestigt. Diese Elektroden dienen zur Aufheizung des Gassensors 2 auf seine Betriebstemperatur, so dass hierdurch die Empfindlichkeit für das betreffende Gas erhöht werden kann. Zur Erhöhung der Ansprechempfindlichkeit dienen auch die Anzahl der Reflexionsstellen 8 und die Länge des Gassensors 2.

Die Fig. 11 zeigt ein Ausführungsbeispiel des Gassensors, das ähnlich demjenigen der Fig. 10 ist. Der Unterschied bei der Fig. 11 liegt darin, dass das Material 1 nicht zusätzlich als Heizelement benützt wird. Das Heizelement ist in diesem Fall eine transparente, elektrisch leitende Heizschicht 64, die mit den beiden Elektroden 63 verbunden ist. Der aus dem Lichtleiter 9 austretende Lichtstrahl 59 gelangt durch die
Heizschicht 64 in das Material 1, biegt dort wieder um und
gelangt durch die Heizschicht 64 wieder in den Lichtleiter
9. Der Brechungsindex der Heizschicht 64 entspricht ungefähr
demjenigen des Lichtleiters 9. Der Brechungsindex des Materials 1 des Gassensors 2 ist aber kleiner als derjenige der
Heizschicht 64. Dies gilt für die Wellenlänge $\lambda$ des verwendeten Lichtes.

In der Fig. 12 ist der Gassensor 2 gezeigt, der von einer
Heizeinrichtung aus Widerstandsdrähten 65 auf seine Betriebstemperatur geheizt wird. Wie bereits früher erwähnt,
ist eine solche Heizung nur dann erforderlich, wenn die bestimmte Gasart, die detektiert werden soll, dies verlangt.

Die Fig. 13 zeigt eine induktive Heizung des Gassensors 2.
Die Drähte 64 sind um einen Metallrahmen 25 gewickelt, in
welchem der Gassensor 2 sich befindet. Die Form des Metallrahmens richtet sich selbstverständlich nach der Form des
Gassensors 2. Der in den isolierten Drähten 64 fliessende
Strom induziert im Metallring 25 die für die Aufheizung des
Gassensors notwendige Temperatur.

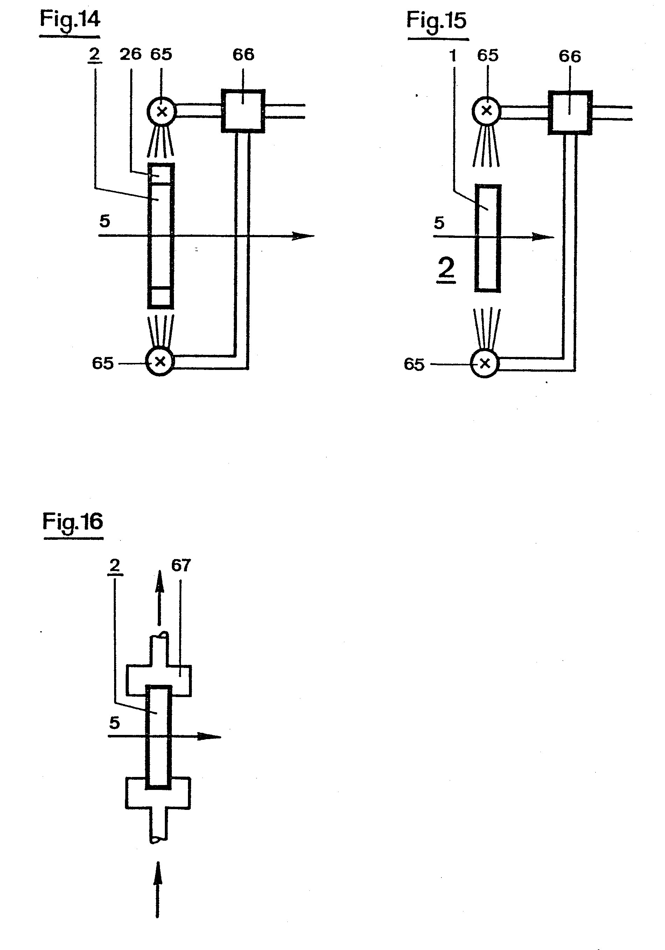

Die Fig. 14 zeigt eine Strahlungsheizung, die aus mindestens
einer Strahlungsquelle 65 besteht. Die Strahlungsquellen 65
sind mit der Steuereinheit 66 verbunden, die für eine gleichmässige Temperatur des Gassensors 2 sorgt. Dieser Gassensor
ist von einer äusseren Schicht 26 umgeben, die von der Strahlung aufgeheizt wird und die Wärme an den Gassensor 2 weitergibt.

Die Fig. 15 zeigt eine Strahlungsheizung, die ähnlich derjenigen der Fig. 14 ist. Der Unterschied zu Fig. 14 liegt
bei der Fig. 15 aber darin, dass keine äussere Schicht 26
vorhanden ist. Das Material 1 wird direkt aufgeheizt durch
die darin absorbierte Strahlung der Strahlungsquellen 65.
Die gleiche Wirkung kann auch eine einzige Strahlungsquelle

erzielen.

Die Fig. 16 zeigt eine normale Konvektionsheizung und der
Gassensor 2 ist von einer konstruktiven Anordnung 67 umgeben, in die warme Luft an einer oder an mehreren Stellen
eingeblasen wird. Die verbrauchte Luft hat ihren Ausgang.
Der Gassensor 2 wird hierdurch auf seine Betriebstemperatur
aufgeheizt. Anstelle oder zusätzlich einer Heizeinrichtung 25,
26, 6, 61, 62, 63, 64, 65, 66, 67 der Figuren 3-16 kann aber
auch der Lichtstrahl 5, 51, 52, 53, 54, 55, 56, 561, 562,
563, 57, 58, 59 selbst zur Erwärmung des Materials 1 des
Gassensors 2 benutzt werden. Wird ein Teil (z.B. mindestens
2 %) der Intensität des Lichtstrahles 5, 51, 52, 53, 54,
55, 56, 561, 562, 563, 57, 58, 59 im Material 1 absorbiert,
so wird dieser absorbierte Anteil in Wärmeenergie umgewandelt und heizt somit das Material 1 auf. Damit wird die
Empfindlichkeit des Gassensors 2 erhöht.

Abschliessend wird darauf hingewiesen, dass die Heizungsmöglichkeiten der Fig. 3, 4, 10 bis 16 nur dann angewendet werden, wenn die zu detektierenden Gasarten dies verlangen.

0120203

C 247                    83 - 104   . 22. März 1983 ·
                         CERBERUS AG, 8708 Männedorf


## P A T E N T A N S P R U E C H E

1. Vorrichtung zum Nachweis von gasförmigen Verunreinigungen
   in Luft mittels eines Gassensors, d a d u r c h   g e k e n n -
   z e i c h n e t, dass das Material (1) des Gassensors (2)
   ein optisch transparentes Gel aus mindestens einem Metalloxid ist, das bei Einwirkung von reduzierenden oder oxidierenden Gasen eine Aenderung seines optischen Absorptions-
   und/oder Reflexionsspektrums erfährt.

2. Vorrichtung nach Anspruch 1, d a d u r c h   g e k e n n -
   z e i c h n e t, dass das Gel eine Porosität von mindestens
   5 Vol.-%, vorzugsweise mindestens 40 Vol.-%, insbesondere
   mindestens 80 Vol.-% aufweist.

3. Vorrichtung nach Anspruch 2, d a d u r c h   g e k e n n -
   z e i c h n e t, dass das Gel eine Korngrösse von maximal
   100%, vorzugsweise maximal 10%, insbesondere maximal 1%
   der Wellenlänge des eingestrahlten Lichtes hat und einen
   Brechungsindex zwischen demjenigen  von Luft und demjenigen des nichtporösen Metalloxids gleicher chemischer Zusammensetzung hat.

4. Vorrichtung nach Anspruch 3, d a d u r c h   g e k e n n -
   z e i c h n e t, dass das Gel mindestens ein Metalloxid
   aus einer oder mehreren der Gruppen Ib, IIa, IIb, IIIa,
   IIIb, IVa, IVb, Va, Vb, VIa, VIb, VIIb, VIII und den Lanthaniden und Aktiniden des Periodensystems enthält.

5. Vorrichtung nach Anspruch 3, d a d u r c h   g e k e n n -
z e i c h n e t , dass das Gel mindestens ein Metalloxid
aus einer oder mehreren der Gruppen Ib, IIa, IIb, IIIa,
IIIb, IVa, IVb, Va, Vb, VIa, VIb, VIIb, VIII und den Lanthaniden und Aktiniden des Periodensystems enthält, wobei
das Metalloxid beziehungsweiseMetalloxidgemisch zusätzlich
mindestens einen Katalysator enthält.

6. Vorrichtung nach Anspruch 4 oder 5, d a d u r c h   g e -
k e n n z e i c h n e t , dass der Gassensor (2) zwischen
mindestens einer Lichtquelle (3, 31, 32, 33, 34, 38, 39)
und mindestens einer Auswerteeinheit (4, 41, 42, 43, 44,
48, 49) angeordnet ist, wobei die Lichtquelle einen Lichtstrahl (5, 51, 52, 53, 54, 58, 59) bestimmter Wellenlänge
auf den Gassensor richtet und die Auswerteeinheit den aus
dem Gassensor austretenden Lichtstrahl (5, 51, 52, 53, 54,
58, 59) empfängt. (Fig. 3, 4, 5, 6, 10, 11)

7. Vorrichtung nach Anspruch 4 oder 5, d a d u r c h   g e -
k e n n z e i c h n e t , dass mindestens eine Lichtquelle
(35, 36, 37) und mindestens eine Auswerteeinheit (45, 46,
47) auf der gleichen Seite des Gassensors (2) angeordnet sind und der Gassensor auf seiner von der Lichtquelle
abgewandten Seite eine Spiegelfläche (71, 72, 73, 74) zur
Reflexion des von der Lichtquelle kommenden Lichtstrahles
enthält. (Fig. 7, 8, 9)

8. Vorrichtung nach Anspruch 6, d a d u r c h   g e k e n n -
z e i c h n e t , dass die Lichtquelle (33, 34) und die
Auswerteeinheit (43, 44) so zum Gassensor (2) angeordnet
sind, dass der Lichtstrahl (53, 54) nach Passieren der
Lichteintrittsfläche (21) an den Grenzflächen (23, 24) des
Gassensors (2) mindestens einmal  totalreflektiert wird
und nach Passieren der Lichtaustrittsfläche (22) des Gassensors (2) auf die Auswerteeinheit (43, 44) trifft. (Fig. 5)

9. Vorrichtung nach Anspruch 8, d a d u r c h   g e k e n n - z e i c h n e t, dass an den Grenzflächen (23, 24) des Gassensors (2) Spiegel angeordnet sind. (Fig. 5)

10. Vorrichtung nach Anspruch 7, d a d u r c h   g e k e n n - z e i c h n e t, dass die an der gegenüberliegenden Seite des Gassensors (2) angeordnete Spiegelfläche (74) so gewölbt ist, dass der reflektierte Lichtstrahl (57) eine längere oder kürzere Wegstrecke durch das Material (1) zurücklegt als der direkt von der Lichtquelle (37) kommende Lichtstrahl (57), und die gesamte Wegstrecke für die Erhöhung der Empfindlichkeit des Gassensors (2) auf das zu detektierende Gas verwendet wird. (Fig. 8)

11. Vorrichtung nach Anspruch 6 oder 7, d a d u r c h   g e - k e n n z e i c h n e t, dass der Gassensor (2) aus zwei durch einen halbdurchlässigen Spiegel (72) getrennte Teile (26, 27) besteht, wobei der Referenzteil (26) aus einem optisch transparenten Gel besteht, das bei Einwirkung von oxidierenden oder reduzierenden Gasen seine optischen Eigenschaften nicht ändert und der Messteil (27) aus einem optisch transparenten Gel besteht, das bei Einwirkung von reduzierenden oder oxidierenden Gasen eine Aenderung seines optischen Absorptionsspektrums erfährt und wobei ferner durch den halbdurchlässigen Spiegel (72) der von der Lichtquelle (36) kommende Lichtstrahl (56) in einen Referenzstrahl (561) und einen Messstrahl (562, 563) aufgeteilt wird und wobei schliesslich nur der Messstrahl (562, 563) durch den Messteil (27) hindurchtritt. (Fig. 9)

12. Vorrichtung nach Anspruch 4 oder 5, d a d u r c h   g e - k e n n z e i c h n e t , dass der Gassensor (2) mehrere Sensorelemente (251, 252, 253, 254) von unterschiedlicher Länge enthält und zwischen mindestens einer Lichtquelle (38) und mindestens einer Auswerteeinheit (48) angeordnet ist. (Fig. 6)

13. Vorrichtung nach Anspruch 12, d a d u r c h  g e -
k e n n z e i c h n e t , dass mindestens zwei Sensorelemente
(251, 252, 253, 254) das gleiche Material (1) enthalten.
(Fig. 6)

14. Vorrichtung nach Anspruch 12, d a d u r c h  g e -
k e n n z e i c h n e t , dass jedes Sensorelement (251,
252, 253, 254) unterschiedliches Material (1) enthält.
(Fig. 6)

15. Vorrichtung nach Anspruch 12, d a d u r c h  g e -
k e n n z e i c h n e t , dass mindestens eines der
Sensorelemente (251, 252, 253, 254) aus einem optisch
transparenten Gel besteht, das bei Einwirkung von oxidierenden oder reduzierenden Gasen sein optisches Absorptions- und/oder Reflexionsspektrum nicht ändert.
(Fig. 6)

16. Vorrichtung nach Anspruch 4 oder 5, d a d u r c h  g e -
k e n n z e i c h n e t , dass das Material (1) des
Gassensors (2) einen Lichtleiter (9) auf eine bestimmte
Länge umgibt und die Brechungsindices ($n_1$, $n_2$) des Materials (1) und des Lichtleiters (9) ein solches Verhältnis zueinander bilden, dass ein im Lichtleiter (9)
sich fortpflanzender Lichtstrahl (59) an der Grenzfläche zwischen dem Lichtleiter (9) und dem Material (1)
total reflektiert wird und wobei schliesslich an jeder
Reflexionsstelle (8) der totalreflektierte Lichtstrahl
(59) um das Mass seiner Wellenlänge in das Material (1)
eindringt und wieder in den Lichtleiter (9) zurückkehrt.
(Fig. 10)

17. Vorrichtung nach Anspruch 4 oder 5, d a d u r c h g e - k e n n z e i c h n e t , dass zur Erhöhung der Empfindlichkeit des Gassensors (2) eine Heizeinrichtung (6) vorgesehen ist, die das Material (1) des Gassensors auf eine bestimmte Temperatur aufheizt und mittels eines Gerätes (61) konstant aufrecht erhält. (Fig. 3)

18. Vorrichtung nach Anspruch 17, d a d u r c h g e k e n n - z e i c h n e t, dass die Heizeinrichtung (6) als Widerstandsheizung ausgebildet ist, wobei das mit zwei Elektroden (62) verbundene Material (1) des Gassensors (2) mittels Stromdurchgang aufgeheizt wird. (Fig. 4, 10)

19. Vorrichtung nach Anspruch 17, d a d u r c h g e k e n n - z e i c h n e t, dass die Heizeinrichtung (6) als Widerstandsdrähte (65) ausgebildet ist. (Fig. 12)

20. Vorrichtung nach Anspruch 17, d a d u r c h g e k e n n - z e i c h n e t, dass die Heizeinrichtung (6) als Widerstandsheizung ausgebildet ist und eine optisch transparente, elektrisch leitende Heizschicht (64), die mit zwei Elektroden (63) verbunden ist, das Material (1) des Gassensors (2) aufheizt. (Fig. 11)

21. Vorrichtung nach Anspruch 20, d a d u r c h g e k e n n - z e i c h n e t, dass die optisch transparente Heizschicht (64) für die Wellenlänge $\lambda$ des verwendeten Lichtes einen höheren Brechungsindex aufweist als das Material (1) des Gassensors (2). (Fig. 11)

22. Vorrichtung nach Anspruch 17, d a d u r c h g e k e n n - z e i c h n e t, dass die Heizeinrichtung (6) als induktive Heizung (25, 64) ausgebildet ist. (Fig. 13)

23. Vorrichtung nach Anspruch 17, d a d u r c h   g e - k e n n z e i c h n e t , dass die Heizeinrichtung (6) als Strahlungsheizung (25, 65, 66) mit mindestens einer Strahlungsquelle (65) ausgebildet ist. (Fig. 14)

24. Vorrichtung nach Anspruch 17 und 23, d a d u r c h   g e k e n n z e i c h n e t , dass die Heizeinrichtung (6) als Strahlungsheizung (65, 66) ausgebildet ist, wobei das Material (1) des Gassensors (2) durch Absorption der Strahlung von mindestens einer Strahlungsquelle (65) direkt aufgeheizt wird. (Fig. 15)

25. Vorrichtung nach Anspruch 17, d a d u r c h   g e - k e n n z e i c h n e t , dass die Heizeinrichtung (6) als Konvektionsheizung (67) ausgebildet ist. (Fig. 16)

26. Vorrichtung nach einem der Ansprüche 6 bis 16 und 20, d a d u r c h   g e k e n n z e i c h n e t , dass bei gegebener Porosität und bei gegebener chemischer Zusammensetzung des Materials (1) durch Veränderung der Weglänge, die der Lichtstrahl (5, 51, 52, 53, 54, 55, 56, 562, 563, 57, 58, 59) im Material (1) des Gassensors (2) zurücklegt, die Empfindlichkeit des Gassensors (2) verändert wird. (Fig. 3 bis 11)

27. Vorrichtung nach einem der Ansprüche 1 - 26, d a - d u r c h   g e k e n n z e i c h n e t , dass zur Erhöhung der Empfindlichkeit des Gassensors (2) die Temperatur des Materials (1) dadurch erhöht wird, dass mindestens  2 %, vorzugsweise mindestens 20 %, insbesondere mindestens 50 % der Intensität des Lichtstrahles (5, 51, 52, 53, 54, 55, 56, 561, 562, 563, 57, 58, 59) im Material (1) absorbiert und dadurch in Wärme umgewandelt werden. (Fig. 3 bis 16)

0120203

1 (5)

Fig.1

Fig.2

Fig.3

2

Fig.4

2

Fig.5

$\lambda_1$

33

53

23  1  22  44

21

$\lambda_1$  54

34  2

24

53

43

54

Fig.6

38  58  254  253  252  251  58  48

2

Fig.7

35  1  71

55

55

45  2

0120203

Fig.8

47    1    74

57

37    57

2

Fig.9

36    26    72    27    73    461

56

46    561    562

562    563

562

2

Fig.10

39    59    62    1    8    62    9    59    49

8    **2**

Fig.11

39    59 63 64    8    1 63 59 9    49

8    **2**    64

Fig.12

65    **2**

5

Fig.13

25    64    **2**

5

Fig.14

2  26  65        66

65

Fig.15

1  65        66

5

2

65

Fig.16

2      67

5

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-C- 819 734 (BASF)<br>* Insgesamt *<br><br>--- | 1,4,17 | G 01 N 21/78<br>G 01 N 31/22 |
| A | US-A-3 663 176 (G. CAGLE et al.)<br>* Spalten 1,2 *<br><br>--- | 1,4 | |
| A | US-A-3 920 402 (N. AFANASIEV et al.)<br>* Spalten 3,4 *<br><br>--- | 1,6,11,12,15 | |
| A | US-A-3 754 867 (K. GUENTHER)<br>* Spalten 2,4; Figuren 4-6 *<br><br>--- | 1,6,7 | |
| A | DE-A-2 840 867 (DRÄGERWERK)<br>* Seiten 5,6; Figur 1 *<br><br>--- | 1,16 | RECHERCHIERTE SACHGEBIETE (Int. Cl. 3) |
| A | FR-A- 811 031 (SOCIETE FRANCAISE DES REGULATEURS UNIVERSELS ARCA)<br>* Seite 2, Figuren 1,2 *<br><br>--- | 1,6 | G 01 N 21/78<br>G 01 N 31/22<br>G 01 N 33/00<br>G 01 N 31/00 |
| A | US-A-3 276 004 (E. MAYO)<br>* Spalten 2,4 *<br><br>----- | 1 | |

Der vorliegende Recherchenbericht wurde für alle Patentansprüche erstellt.

| Recherchenort<br>DEN HAAG | Abschlußdatum der Recherche<br>02-07-1984 | Prüfer<br>BOEHM CH.E.D. |
|---|---|---|